# EUROPEAN PATENT APPLICATION

(11) **EP 1 257 085 A2**
(43) Date of publication of application: **13.11.2002**
(21) Application number: 02253307.9
(22) Date of filing: 10.05.2002
(51) Int. Cl.: H04L 12/14, H04M 15/00

(54) **Apparatus and method for fee charging, and information recording medium**

(30) Priority: 11.05.2001 JP 2001141899
(71) Applicant: Pioneer Corporation, Meguro-ku, Tokyo (JP)
(72) Inventor: Odagawa, Satoshi, c/o Pioneer Corporation, Tsurugashima-shi, Saitama-ken (JP); Shioda, Takehiro, c/o Pioneer Corporation, Tsurugashima-shi, Saitama-ken (JP)
(74) Representative: Haley, Stephen

(57) **Abstract**

There is disclosed a charging control apparatus which performs optimum and fair charging and can promote further use of a network including a telephone line (L). A charging status of a fee generated in executing an information processing realized by performing transmission/reception of information between a provider apparatus (SP) and at least one terminal apparatus (T) via the telephone line (L) and connection apparatus (CN) is controlled by the provider apparatus (SP) in accordance with at least one of a processing status in the information processing and a status of transmission/reception of the information. Moreover, the controlled borne fee is charged to at least one of the provider apparatus (SP) and the terminal apparatus (T) via the connection apparatus (CN).

## Description

The present invention relates to technical fields of a charging control apparatus, charging control method, and information recording medium. The present invention particularly relates to technical fields of a charging control apparatus and method for controlling a charging status of a fee generated during execution of an information processing realized by transmitting/receiving information between a server apparatus and one or a plurality of terminal apparatuses via a network, a program for a charging control in which the charging status is controlled, and an information recording medium in which the program for the charging control is recorded.

In a conventional status, for a fee generated by making a usual telephone call, that is, a fee of a telephone line, a person who makes a call is to pay a value totaled for each predetermined time as the fee.

On the other hand, examples of other charging statuses of the fees include a status in which a receiver pays a fee for a call only from a specific transmitter, and a status in which the fee is equally split between the transmitter and the receiver in making a call to a telephone number registered beforehand.

However, in the above-described series of charging statuses, when the total fee is borne by either the transmitter or the receiver, or even when the fee is equally borne by both the transmitter and the receiver, it is necessary to register the telephone number as an object beforehand.

Moreover, since there are only above-described choices of the charging statuses, an optimum and fair charging cannot be realized. As a result, there is a problem that the use of the telephone line for other use purposes cannot be promoted.

The present invention has been developed to solve the above problems. An object the invention is, therefore, to provide a charging control apparatus and method in which optimum and fair charging is performed and further use of a network including a telephone line can be promoted, a charging controlling program for controlling a charging status, and an information recording medium in which the charging controlling program is recorded.

The above object of the present invention can be achieved by a charging control apparatus. The charging control apparatus is provided with: a charging control device such as charging server for controlling a charging status of a fee generated in executing an information processing realized by performing transmission/reception of information between a server apparatus and at least one terminal apparatus via a network in accordance with at least one of a processing status in said information processing and a status of the transmission/reception of said information; and a charging device for charging the fee controlled by said charging control device to at least one of said server apparatus and said terminal apparatus.

According to the charging control apparatus, the charging status of a fee generated during execution of an information processing is controlled in accordance with at least one of a processing status and an information transmission/reception status in an information processing via a network, and the optimum and fair charging can therefore be performed in accordance with various processing statuses of the information processing. Therefore, since the optimum and fair charging is performed, the use of the information processing via the network can be promoted.

In one aspect of the charging control apparatus, the apparatus is further provided with said charging control device for controlling said charging status in accordance with the status of the transmission/reception of said information controls said charging status based on an information amount of said transmitted/received information.

According to this aspect, since the charging status is controlled based on an information amount of the information transmitted/received in the information processing, not based on a use time of the network, the charging status can more appropriately be controlled.

In another aspect of the charging control apparatus, said information includes at least advertisement information indicating a content of advertisement to be outputted in said terminal apparatus, and said charging control device for controlling said charging status based on the information amount of said transmitted/received information charges said borne fee corresponding to the information amount of said advertisement information to said server apparatus.

According to this aspect, since a borne fee for transmitting an advertisement to be outputted in a terminal apparatus to the terminal apparatus is borne by a server apparatus side, the charging status can be controlled more appropriately and fairly.

In further aspect of the charging control apparatus, said information processing is a game executed while said information is transmitted/received between said server apparatus and said terminal apparatus via said network, and said charging control device for controlling said charging status in accordance with the processing status in said information processing controls said charging status based on a win/loss of said game.

According to this aspect, the charging status is controlled based on a win/loss of a game, so that the charging status is controlled more fairly, and an interest in the game is increased.

In further aspect of the charging control apparatus, said charging control device controls said charging status so that said fee to be borne by a winner of said game is smaller than said fee to be borne by a loser of said game.

According to this aspect, the charging status is controlled in such a manner that a fee to be borne by a winner of the game is smaller than a fee to be borne by a loser of the game, so that the interest in the game is further increased.

In further aspect of the charging control apparatus, said charging control device controls said charging status based on a content of said game.

According to this aspect, since the charging status is controlled in accordance with a content of the game, such as a progress of the game, the charging status can more appropriately be controlled for each game.

In further aspect of the charging control apparatus, said information is at least one of program and data to be used in said terminal apparatus, said information processing is a transmission processing to transmit said one to said terminal apparatus from said server apparatus, and said charging control device for controlling said charging status in accordance with the status of the transmission/reception of said information controls said charging status so that said fee generated by the transmission of said one is charged to said server apparatus.

According to this aspect, the fee generated during transmission of the program to the terminal apparatus is charged to the server apparatus side, so that the transmission of the program to the terminal apparatus can be promoted.

In further aspect of the charging control apparatus, said charging control device for controlling said charging status in accordance with the status of the transmission/reception of said information controls said charging status so that a part of said fee generated by the transmission of said one is charged to said terminal apparatus.

According to this aspect, a part of the fee generated during a transmission processing of the program is charged to the terminal apparatus side, so that the charging status can be set in accordance with a property of the program.

In further aspect of the charging control apparatus, said information processing is a sale processing to sell a commodity to a user of said terminal apparatus via said server apparatus, said information is sale information to be transmitted/received during the sale of the commodity, and said charging control device controls said charging status so that said fee generated by the transmission/reception of said sale information and a price of said commodity are charged to said terminal apparatus.

According to this aspect, the charging status is controlled in such a manner that the fee generated by transmission/reception of sale information necessary for sale of a commodity and a price of the commodity are charged to the terminal apparatus side, and the charging can therefore be performed in a status suitable for the sale of the commodity via the network.

In further aspect of the charging control apparatus, said server apparatus transmits catalog information for guiding the sale to said terminal apparatus to sell said commodity, and said charging control device controls said charging status so that said fee generated by the transmission of said catalog information is charged to said server apparatus.

According to this aspect, since the fee generated during the transmission of catalog information required for the sale of the commodity is charged to the server apparatus side, the sale of the commodity can be promoted.

The above object of the present invention can be achieved by a charging control apparatus. The charging control apparatus is provided with: a charging control device which controls a charging of a fee generated in executing an information processing realized by performing transmission/reception of information between a plurality of computer via a network in accordance with a charged destination Information which indicates a charged destination of said fee and which is transmitted from one of said computers; and a charging device which charges said fee controlled by said charging control device to one or a plurality of said computer.

According to the charging control apparatus, the charging of the fee is controlled in accordance with a charged destination Information which indicates a charged destination of said fee and which is transmitted from one of said computers, and the optimum and fair charging can therefore be performed in accordance with the charged destination Information. Therefore, since the optimum and fair charging is performed, the use of the information processing via the network can be promoted.

The above object of the present invention can be achieved by a server apparatus, which is included in a charging control system which controls a charging of a fee generated in executing an information processing realized by performing transmission/reception of information between said server apparatus, at least one terminal apparatus and a charging control apparatus via a network. The server apparatus is provided with: an execution device which execute said information processing via said network; and a charging processing requesting device which transmits a charging processing request, which includes at least one of a processing status in said information processing and a status of the transmission/reception of said information, to said charging control apparatus.

According to the server apparatus, the charging of the fee is controlled in accordance with the charging processing request, and the optimum and fair charging can therefore be performed in accordance with the charging processing request. Therefore, since the optimum and fair charging is performed, the use of the information processing via the network can be promoted.

The above object of the present invention can be achieved by a charging control method. The charging control method is provided with: a charging control process of controlling a charging status of a fee generated in executing an information processing realized by performing transmission/reception of information between a server apparatus and at least one terminal apparatus via a network in accordance with at least one of a processing status in said information processing and a status of the transmission/reception of said information; and a charging process of charging the fee controlled by said charging control process to at least one of said server apparatus and said terminal apparatus.

According to the charging control method, the charging status of a fee generated during execution of an information processing is controlled in accordance with at least one of a processing status and an information transmission/reception status in an information processing via a network, and the optimum and fair charging can therefore be performed in accordance with various processing statuses of the information processing. Therefore, since the optimum and fair charging is performed, the use of the information processing via the network can be promoted.

In one aspect of the charging control method, said charging control process of controlling said charging status in accordance with the status of the transmission/reception of said information comprises a process of controlling said charging status based on an information amount of said transmitted/received information.

According to this aspect, since the charging status is controlled based on an information amount of the information transmitted/received in the information processing, not based on a use time of the network, the charging status can more appropriately be controlled.

In another aspect of the charging control method, said information includes at least advertisement information indicating a content of advertisement to be outputted in said terminal apparatus, and said charging control process of controlling said charging status based on the information amount of said transmitted/received information comprises a process of charging said borne fee corresponding to the information amount of said advertisement information to said server apparatus.

According to this aspect, since a borne fee for transmitting an advertisement to be outputted in a terminal apparatus to the terminal apparatus is borne by a server apparatus side, the charging status can be controlled more appropriately and fairly.

In further aspect of the charging control method, said information processing is a game executed while said information is transmitted/received between said server apparatus and said terminal apparatus via said network, and said charging control process of controlling said charging status in accordance with the processing status in said information processing comprises a process of controlling said charging status based on a win/loss of said game.

According to this aspect, the charging status is controlled based on a win/loss of a game, so that the charging status is controlled more fairly, and an interest in the game is increased.

In further aspect of the charging control method, said charging control process comprises a process of controlling said charging status so that said fee to be borne by a winner of said game is smaller than said fee to be borne by a loser of said game.

According to this aspect, the charging status is controlled in such a manner that a fee to be borne by a winner of the game is smaller than a fee to be borne by a loser of the game, so that the interest in the game is further increased.

In further aspect of the charging control method, said charging control process comprises a process of controlling said charging status based on a content of said game.

According to this aspect, since the charging status is controlled in accordance with a content of the game, such as a progress of the game, the charging status can more appropriately be controlled for each game.

In further aspect of the charging control method, said information is at least one of program and data to be used in said terminal apparatus, and said information processing is a transmission processing to transmit said one to said terminal apparatus from said server apparatus, and said charging control process of controlling said charging status in accordance with the status of the transmission/reception of said information comprises a process of controlling said charging status so that said fee generated by the transmission of said one is charged to said server apparatus.

According to this aspect, the fee generated during transmission of the program to the terminal apparatus is charged to the server apparatus side, so that the transmission of the program to the terminal apparatus can be promoted.

In further aspect of the charging control method, said charging control process of controlling said charging status in accordance with the status of the transmission/reception of said information comprises a process of controlling said charging status so that a part of said fee generated by the transmission of said one is charged to said terminal apparatus.

According to this aspect, a part of the fee generated during a transmission processing of the program is charged to the terminal apparatus side, so that the charging status can be set in accordance with a property of the program.

In further aspect of the charging control method, said information processing is a sale processing to sell a commodity to a user of said terminal apparatus via said server apparatus, said information is sale information to be transmitted/received during the sale of the commodity, and said charging control process comprises a process of controlling said charging status so that said fee generated by the transmission/reception of said sale information and a price of said commodity are charged to said terminal apparatus.

According to this aspect, the charging status is controlled in such a manner that the fee generated by transmission/reception of sale information necessary for sale of a commodity and a price of the commodity are charged to the terminal apparatus side, and the charging can therefore be performed in a status suitable for the sale of the commodity via the network.

In further aspect of the charging control method, further comprising a transmission process of transmitting catalog information for guiding the sale to said terminal apparatus from said server apparatus to sell said commodity, wherein said charging control process comprises a process of controlling said charging status so that said fee generated by the transmission of said catalog information is charged to said server apparatus.

According to this aspect, since the fee generated during the transmission of catalog information required for the sale of the commodity is charged to the server apparatus side, the sale of the commodity can be promoted.

The above object of the present invention can be achieved by an information recording medium. The information recording medium records a program for a charging control so as to be readable by a computer included in said terminal apparatus according to claim 1, wherein said program allows said computer to function as: a execution device for executing said information processing via said network; and a payment device for performing a payment processing to pay said fee charged by said charging device.

According to the information recording medium, the computer reads out the program from the information recording medium and it functions in such a manner that a payment processing of the fee charged in accordance with at least one of the processing status and the status of the transmission/reception of the information in the information processing via the network is performed on the terminal apparatus side. Therefore, the fee can be charged to the terminal apparatus in an optimum and fair manner in accordance with various processing statuses of the information processing. Therefore, since the optimum and fair charging is performed, the use of the information processing via the network can be promoted.

In the Drawings;
FIG. 1 is a block diagram showing the whole constitution of a network system according to a first embodiment;
FIG. 2A is a block diagram showing the detailed constitution of a terminal apparatus;
FIG. 2B is a block diagram showing the detailed constitution of a connection apparatus;
FIG. 3 is a block diagram showing the detailed constitution of a provider apparatus according to the first embodiment;
FIG. 4A is a flow diagram showing the status of the charging control processing in a transmission process of a program according to the first embodiment;
FIG. 4B is a flow diagram showing the status of the charging control processing in the transmission process of data for a game according to the first embodiment;
FIG. 5 is a flow diagram showing the status of the charging control processing in the network according to a second embodiment;
FIG. 6 is a flow diagram showing the status of the charging control processing in the network according to a third embodiment;
FIG. 7 is a flow diagram showing the status of the charging control processing in the network according to a fourth embodiment;
FIG. 8 is a flow diagram showing the status of the charging control processing in the network according to a fifth embodiment;
FIG. 9 is a flow diagram showing the status of the charging control processing in the network according to a sixth embodiment;
FIG. 10A is a flow diagram showing the status of the charging control processing in the transmission process of the program according to a seventh embodiment;
FIG. 10B is a flow diagram showing the status of the charging control processing in the transmission process of data for the game according to a seventh embodiment;
FIG. 11 is a flow diagram showing the status of the charging control processing in the network according to an eighth embodiment;
FIG. 12 is a block diagram showing the whole constitution of the network system according to a ninth embodiment; and
FIG. 13 is a flow diagram showing the status of the charging control processing in the network according to the ninth embodiment.

Preferred embodiments of the present invention will next be described with reference to the drawings.

Additionally, in the embodiments described hereinafter, the present invention is applied to a control of charging/bearing of a communication fee generated in using a network system including a network constituted using a telephone line.

### (I) First Embodiment

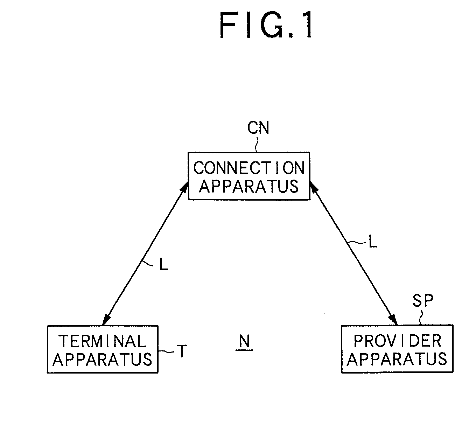

A first embodiment of the present invention will first be described with reference to FIGs. 1 to 4.

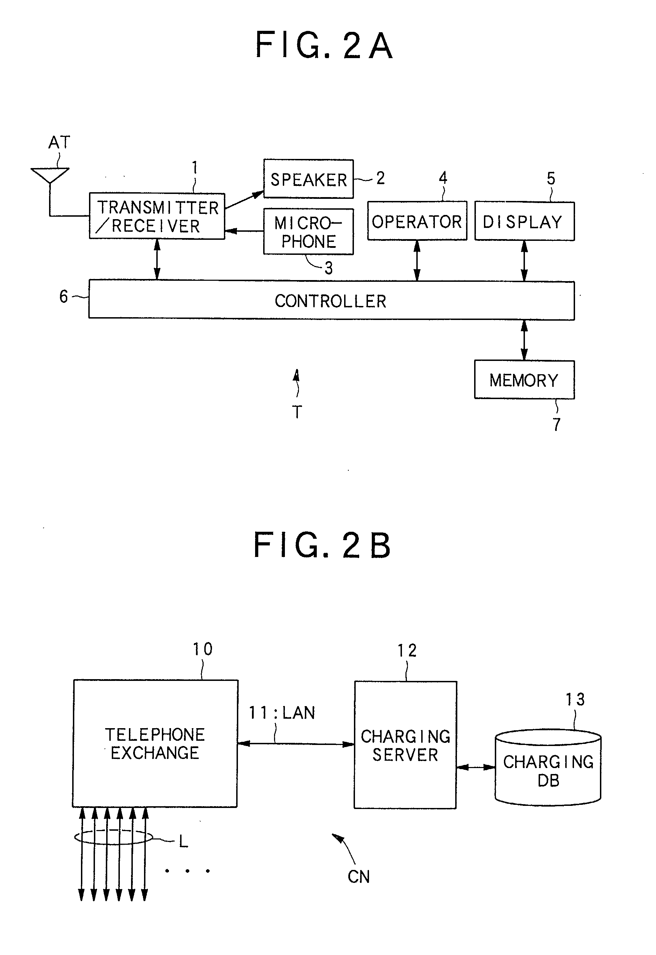

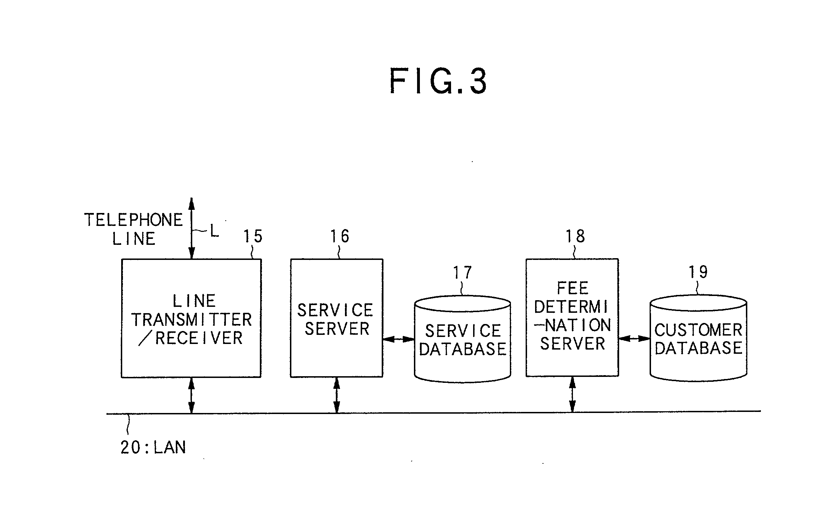

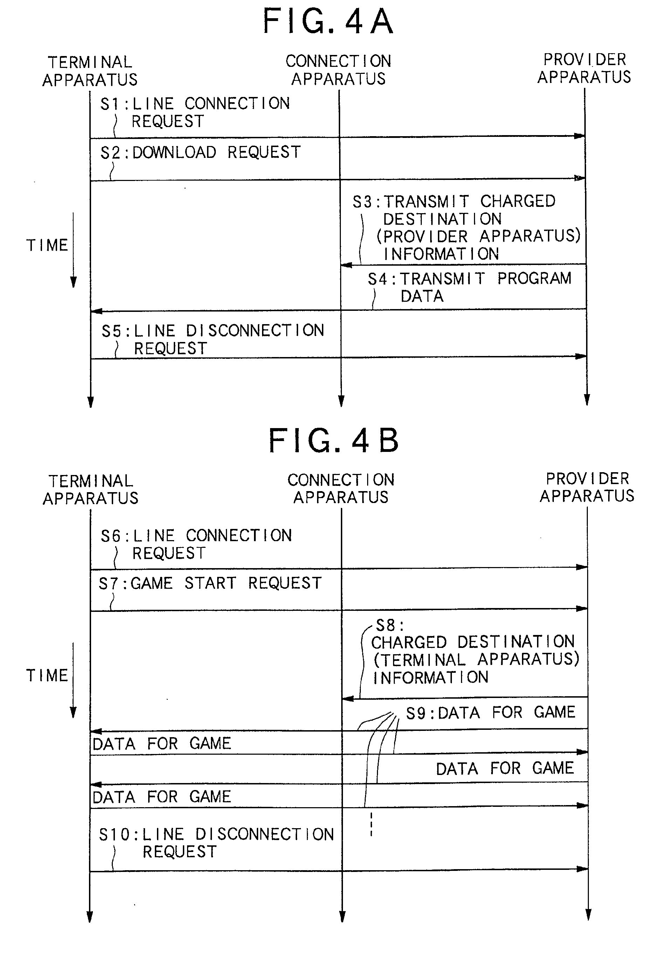

Additionally, FIG. 1 is a block diagram showing a schematic constitution of a network system according to the first embodiment, FIGs. 2 and 3 show block diagrams showing detailed constitutions of respective members constituting the network system, and FIG. 4 is a flow diagram showing a flow of information in the network system.

Moreover, in the first embodiment described hereinafter, a program for a game accumulated/stored in a service database in a provider apparatus described later is transmitted to a terminal apparatus described later via a telephone line free of charge. The terminal apparatus uses the transmitted program to transmit/receive information (hereinafter referred to simply as the data for the game) with respect to the provider apparatus for a charged fee and to play the game.

As shown in FIG. 1, a network system N according to the first embodiment is constituted of: a terminal apparatus T such as a personal mobile phone or personal computer; a provider apparatus SP which is connected to the terminal apparatus T via a connection apparatus CN described later to transmit/receive various data with respect to the terminal apparatus T and to perform a processing described later in the respective embodiments including the first embodiment, and which is disposed in a so-called service provider; and the connection apparatus CN which connects the terminal apparatus T to the provider apparatus SP via a telephone line L and which performs a charging control processing described later.

Additionally, the telephone line L shown in FIG. 1 includes a cable line shown in FIG. 1, and a radio line in a case in which the terminal apparatus T is a mobile radio phone.

The detailed constitutions of respective constituting members will next be described.

First, the detailed constitution of the terminal apparatus T which is the mobile phone will be described with reference to FIG. 2A.

As shown in FIG. 2A, the terminal apparatus T of the first embodiment is constituted of a transmitter/receiver 1, speaker 2, microphone 3, operator 4, display 5, memory 7, and controller 6.

An operation will next be described.

The information transmitted via the connection apparatus CN by radio communication is inputted into the transmitter/receiver 1 via an antenna AT.

Subsequently, the transmitter/receiver 1 subjects the received information to a reception processing such as a preset demodulation processing, outputs sound information from the received information via the speaker 2, and outputs image information from the received information to the display 5 via the controller 6.

On the other hand, a sound (including voice) inputted via the microphone 3 is subjected to a transmission processing such as a preset modulation processing in the transmitter/receiver 1, and outputted to the connection apparatus CN via the antenna AT and telephone line L.

Moreover, the operation necessary for performing transmission/reception of the information is executed in the operator 4, and the operator 4 outputs an operation signal corresponding to the executed operation to the controller 6.

Thereby, the controller 6 one-dimensionally handles the transmission/reception processing of the sound and image information. Additionally, the information necessary for the processing is temporarily stored in the memory 7, read out, and used in the processing as the occasion demands. Moreover, information to be notified to a user in the processing is displayed in the display 5.

In parallel to these processings, the controller 6 executes various information processings corresponding to the information based on the information transmitted/received with respect to the provider apparatus SP as described later. Also in this case, temporary storing of the information in the memory 7 is performed in parallel. Furthermore, the information necessary for executing the information processing is inputted in the operator 4, and the necessary information is similarly displayed in the display 5.

The detailed constitution of the connection apparatus CN will next be described with reference to FIG. 2B.

As shown in FIG. 2B, the connection apparatus CN of the first embodiment is installed in facilities owned by a telephone corporation, and is concretely constituted of: an telephone exchange 10; a local area network (LAN) 11; a charging server 12 as the charging device; and a charging database 13.

An operation will next be described.

First, the telephone exchange 10 exchanges/controls the transmission/reception of the information on a plurality of telephone lines including the telephone line L shown in FIG. 1.

In parallel, the telephone exchange 10 detects charged destination information transmitted/received on the telephone line L as described later, and outputs the information to the charging server 12 via the LAN 11.

Thereby, the charging server 12 transmits/receives the necessary information with respect to the charging database 13 and performs a charging control processing as described later.

Furthermore, the charging database 13 accumulates/stores the information necessary for the charging control (e.g., personal information such as a name and address of a user having the telephone number as a charging object, provider information such as a name and address of the service provider having the provider apparatus SP, and the like), and outputs the information to the charging server 12 for use in the charging control processing.

The detailed constitution of the provider apparatus SP will next be described with reference to FIG. 3.

As shown in FIG. 3, the provider apparatus SP of the first embodiment is constituted of: a line transmitter/receiver 15 connected to the telephone line L; a service server 16; a service database 17; a fee determination server 18 as the charging control device; a customer database 19; and a LAN 20.

An operation will next be described.

First, the line transmitter/receiver 15 receives the information to be transmitted via the telephone line L via the LAN 20, subjects the information to the transmission processing including the preset modulation processing, and transmits the information subjected to the transmission processing onto the telephone line L. On the other hand, upon receiving the information to be received via the telephone line L from the telephone line L, the line transmitter/receiver subjects the information to the reception processing including the preset demodulation processing, and transmits the information subjected to the reception processing onto the necessary constituting member via the LAN 20.

Subsequently, the service database 17 accumulates/stores various information to be supplied to the terminal apparatus T in the processing of the first embodiment, and outputs the information to the service server 16 in response to a request from the service server 16 as described later.

Moreover, the service server 16 acquires the information necessary for executing the processing of the first embodiment from the service database 17 and executes the processing with the terminal apparatus T.

The charging control processing according to the first embodiment will next be described in detail with reference to FIG. 4.

First, a processing in a step of transmitting (i.e., so-called downloading) the program for the game to the terminal apparatus T from the provider apparatus SP will be described with reference to FIG. 4A.

As shown in FIG. 4A, in a transmission step of the necessary program, first the terminal apparatus T requests the provider apparatus SP via the telephone line L to establish connection between the provider apparatus SP and the terminal apparatus T via the telephone line L (step S1) Furthermore, the provider apparatus SP is requested via the telephone line L to transmit the necessary program after the establishment of the connection (step S2).

Subsequently, the service server 16 and fee determination server 18 in the provider apparatus SP having received the transmission request perform a processing such as identification of the user (customer) who uses the terminal apparatus T having transmitted the transmission request, and defining of the requested program. In this case, the identification processing is performed by transmission/reception of the information between the customer database 19 and the fee determination server 18. On the other hand, the defining processing of the program is performed by the transmission/reception of the information between the service database 17 and the service server 16.

Thereafter, charged destination information is outputted to the charging server 12 in the connection apparatus CN via the telephone line L (step S3). The information indicates that a charged destination of a communication fee corresponding to communication time (hereinafter referred to simply as communication fee) generated in transmitting the program to the terminal apparatus T based on a result of the processing such as the defining is a provider apparatus SP side. Thereby, the charging server 12 performs a setting in the charging database 13 such that the charged destination of the communication fee generated by the transmission processing of the program executed thereafter is the provider apparatus SP.

Finally, the necessary program is transmitted to the terminal apparatus T from the provider apparatus SP via the telephone line L (step S4), and the terminal apparatus T judges that the transmission ends. Then, a line disconnection request for breaking the current established connection with the provider apparatus SP is transmitted to the provider apparatus SP via the telephone line L (step S5), and a series of charging control processing is completed.

Subsequently, the program transmitted as described above is used to perform the transmission/reception of the information for a charged fee with respect to the provider apparatus SP. A processing of a step of playing an actual game in this state will be described with reference to FIG. 4B.

As shown in FIG. 4B, in the playing step of the game using the transmitted program, first the terminal apparatus T requests the provider apparatus SP via the telephone line L to reestablish the connection between the provider apparatus SP and the terminal apparatus T via the telephone line L (step S6). Furthermore, a start of the game is requested after the connection is established. That is, the request for the transmission of the data for the game is made to the provider apparatus SP via the telephone line L (step S7).

Subsequently, the service server 16 and fee determination server 18 in the provider apparatus SP having received the transmission request perform the processing such as the identification of the user (customer) having the terminal apparatus T having transmitted the transmission request and the defining of the requested data for the game. In this case, similarly as shown in FIG. 4A, the identification processing is performed by the transmission/reception of the information between the customer database 19 and the fee determination server 18. On the other hand, the defining processing of the data for the game is performed by the transmission/reception of the information between the service database 17 and the service server 16.

Thereafter, the charged destination information is outputted to the charging server 12 in the connection apparatus CN via the telephone line L (step S8). The information indicates that the charged destination of the communication fee generated in transmitting the data for the game to the terminal apparatus T based on the result of the processing such as the defining is a terminal apparatus T side. Thereby, the charging server 12 performs the setting in the charging database 13 such that the charged destination of the communication fee generated by the transmission/reception processing of the data for the game executed thereafter is the terminal apparatus T.

Subsequently, while the transmission/reception of the actually necessary data for the game is performed between the terminal apparatus T and the provider apparatus SP in accordance with a progress of the game, the game is played (step S9). When the game ends, the line disconnection request for breaking the current established connection with the provider apparatus SP is transmitted to the provider apparatus SP via the telephone line L (step S10), and a series of charging control processing is completed.

Subsequently, a conventional method is used to charge the communication fee generated during the transmission of the program to the service provider having the provider apparatus SP from the telephone corporation having the connection apparatus CN based on the above-described charged destination information. Similarly, the telephone corporation charges the communication fee generated during the transmission of the data for the game to the user (i.e., a game player) who has the terminal apparatus T.

As described above, according to the charging control processing in the network system N of the first embodiment, since the charging status of the communication fee generated during execution of the transmission is controlled in accordance with the status of the transmission of the program or the data for the game via the telephone line L, the optimum and fair charging can be realized in accordance with the status of the transmission.

Moreover, since the communication fee generated during the transmission of the program to the terminal apparatus T is charged to the provider apparatus SP side, the transmission of the program to the terminal apparatus T can be promoted.

Furthermore, since the communication fee generated during the transmission processing of the data for the game is charged to the terminal apparatus T side, the charging status can be set in accordance with a property of the played game.

### (II) Second Embodiment

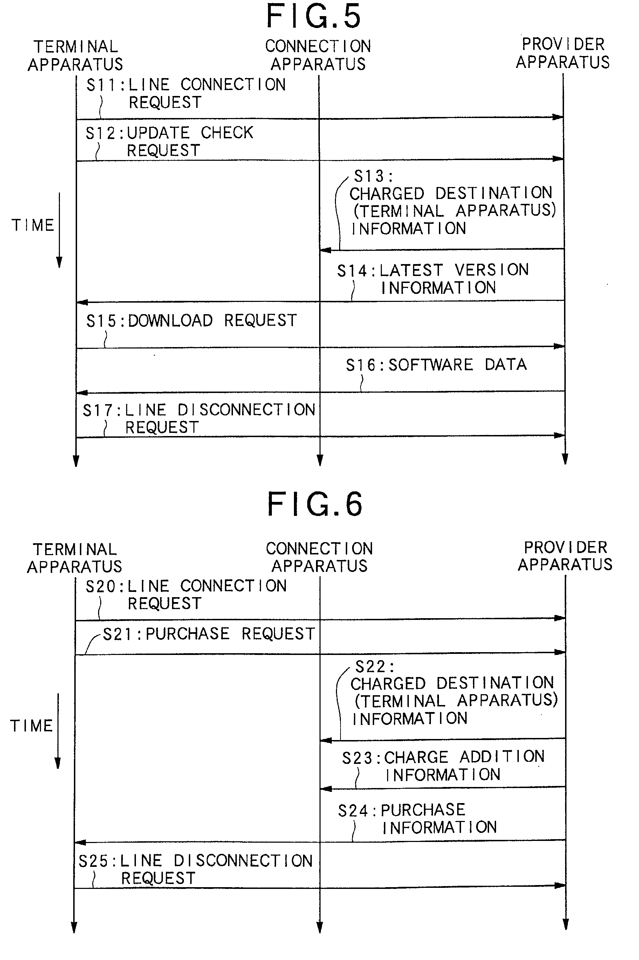

A second embodiment of the present invention will next be described with reference to FIG. 5. Additionally, FIG. 5 is a flow diagram showing a flow of information in the network system according to the second embodiment.

In the first embodiment, the charging control processing in transmitting the program for playing the game and the corresponding data for the game from the provider apparatus SP and playing the game has been described. In the second embodiment described below, the present invention is applied to the charging control processing in updating the program for use in the processing executed in the terminal apparatus T.

Additionally, the whole constitution of the network system and the detailed constitution of each member constituting the network system according to the second embodiment are identical to those described in the first embodiment with reference to FIGs. 1 to 3. Therefore, the second embodiment will be described with reference to FIGs. 1 to 3 as such, and detailed description of each constitution is omitted.

As shown in FIG. 5, in a program update processing of the second embodiment, first the terminal apparatus T requests the provider apparatus SP via the telephone line L to establish the connection between the provider apparatus SP and the terminal apparatus T via the telephone line L (step S11). Furthermore, after the connection is established, the provider apparatus SP is requested via the telephone line L to update the program in the terminal apparatus T (step S12).

Subsequently, the service server 16 and fee determination server 18 in the provider apparatus SP having received the update request perform a processing such as the identification of the user (customer) having the terminal apparatus T having transmitted the update request and checking of an update situation of the requested program. In this case, the identification processing is performed by the transmission/reception of the information between the customer database 19 and the fee determination server 18. On the other hand, the check processing of the update situation of the program is performed by the transmission/reception of the information between the service database 17 and the service server 16.

Thereafter, the charged destination information is outputted to the charging server 12 in the connection apparatus CN via the telephone line L (step S13). The information indicates that the charged destination of the communication fee generated in transmitting the program for update to the terminal apparatus T based on the result of the identification processing is the terminal apparatus T side. Thereby, the charging server 12 performs the setting in the charging database 13 such that the charged destination of the communication fee generated by the transmission processing of the program for the update executed thereafter is the terminal apparatus T.

Subsequently, the service server 16 in the provider apparatus SP transmits the result of the check processing of the update situation as latest version information to the terminal apparatus T via the telephone line L and connection apparatus CN (step S14).

Thereafter, the terminal apparatus T having acquired the latest version information compares the update situation included in the information with version information of the program currently disposed in the terminal apparatus T, and judges whether or not to update the program. Moreover, when the program is judged to be updated, the provider apparatus SP is requested via the telephone line L to transmit the program for the update to the terminal apparatus T (step S15).

Subsequently, the service server 16 in the provider apparatus SP having received the transmission request transmits the necessary program for the update (shown as software data in FIG. 5) to the terminal apparatus T via the telephone line L (step S16). Furthermore, when the terminal apparatus T judges the end of the transmission, the line disconnection request for breaking the current established connection with the provider apparatus SP is transmitted to the provider apparatus SP via the telephone line L (step S17).

Thereafter, the transmitted program for the update is used to update the program in the terminal apparatus T and to complete the series of charging control processing.

As described above, according to the charging control processing in the network system N of the second embodiment, the charged destination is set to the terminal apparatus T side in accordance with the transmission status of the program for the update via the telephone line L, so that the optimum and fair charging can be performed in accordance with the status of the transmission processing of the program for the update.

Moreover, since the communication fee generated in transmitting the program for the update to the terminal apparatus T is charged to the terminal apparatus T side, the charging status can be set in accordance with the property of the program for the update.

Furthermore, since the charging status is controlled based on a price of the acquired program for the update regardless of the use time of the telephone line L, the charging status can be controlled more appropriately.

### (III) Third Embodiment

A third embodiment of the present invention will next be described with reference to FIG. 6. Additionally, FIG. 6 is a flow diagram showing a flow of information in the network system according to the third embodiment.

In the first and second embodiments, the charging control processing in transmitting the program for playing the game and the corresponding data for the game from the provider apparatus SP and playing the game or in updating the program in the terminal apparatus T has been described. In the third embodiment described below, the present invention is applied to the charging control processing in a case in which the user having the terminal apparatus T purchases a commodity or a service (hereinafter referred to collectively as the commodity) provided in the provider apparatus SP.

Additionally, the whole constitution of the network system and the detailed constitution of each member constituting the network system according to the third embodiment are identical to those described in the first embodiment with reference to FIGs. 1 to 3. Therefore, the third embodiment will be described with reference to FIGs. 1 to 3 as such, and the detailed description of each constitution is omitted.

As shown in FIG. 6, in a commodity purchase processing of the third embodiment, first the terminal apparatus T requests the provider apparatus SP via the telephone line L to establish the connection between the provider apparatus SP and the terminal apparatus T via the telephone line L (step S20). Furthermore, after the connection is established, the terminal apparatus T transmits a request to purchase the commodity to the provider apparatus SP via the telephone line L (step S21).

Subsequently, the service server 16 and fee determination server 18 in the provider apparatus SP having received the purchase request perform a processing such as the identification of the user (customer) having the terminal apparatus T having transmitted the purchase request and checking of the requested purchase commodity. In this case, the identification processing is performed by the transmission/reception of the information between the customer database 19 and the fee determination server 18. On the other hand, the check processing of the purchase commodity is performed by the transmission/reception of the information between the service database 17 and the service server 16.

Thereafter, the charged destination information is outputted to the charging server 12 in the connection apparatus CN via the telephone line L (step S22). The information indicates that the charged destination of the communication fee generated during the transmission/reception of the information necessary for the processing to purchase the commodity between the terminal apparatus T and the provider apparatus SP based on the result of the identification processing is the terminal apparatus T side. Thereby, the charging server 12 performs the setting in the charging database 13 such that the charged destination of the communication fee generated by the processing executed thereafter is the terminal apparatus T.

Subsequently, the service server 16 in the provider apparatus SP transmits charge addition information indicating that the charging destination of the price of the commodity to be purchased is the terminal apparatus T side to the charging server 12 in the connection apparatus CN via the telephone line L (step S23). Thereby, the charging server 12 performs the setting such that the charged destination of the fee necessary for purchasing the commodity is the terminal apparatus T in the charging database 13.

Subsequently, the provider apparatus SP transmits the information to be transmitted to the terminal apparatus T during the purchase of the commodity as the purchase information to the terminal apparatus T via the telephone line L and connection apparatus CN (step S24). The terminal apparatus T having received the purchase information uses the purchase information to perform a purchase processing of the necessary commodity.

Thereafter, the terminal apparatus T judges that the purchase processing ends. Then, the line disconnection request for breaking the current established connection with the provider apparatus SP is transmitted to the provider apparatus SP via the telephone line L (step S25) and the series of charging control processing is ended.

As described above, according to the charging control processing in the network system N of the third embodiment, the charging status of the necessary communication fee is controlled for the purchase processing of the commodity via the telephone line L, and therefore the optimum and fair charging can be performed during the purchase of the commodity.

Moreover, since the charging status is controlled based on the purchase price of the commodity, not the use time of the telephone line L, the charging status can be controlled more appropriately.

Furthermore, the charging status is controlled so that the communication fee generated by the transmission/reception of the information necessary for the purchase of the commodity and the price of the commodity are charged to the terminal apparatus side, and therefore the charging can be performed in a statusesuitable for the purchase of the commodity via the telephone line L.

### (IV) Fourth Embodiment

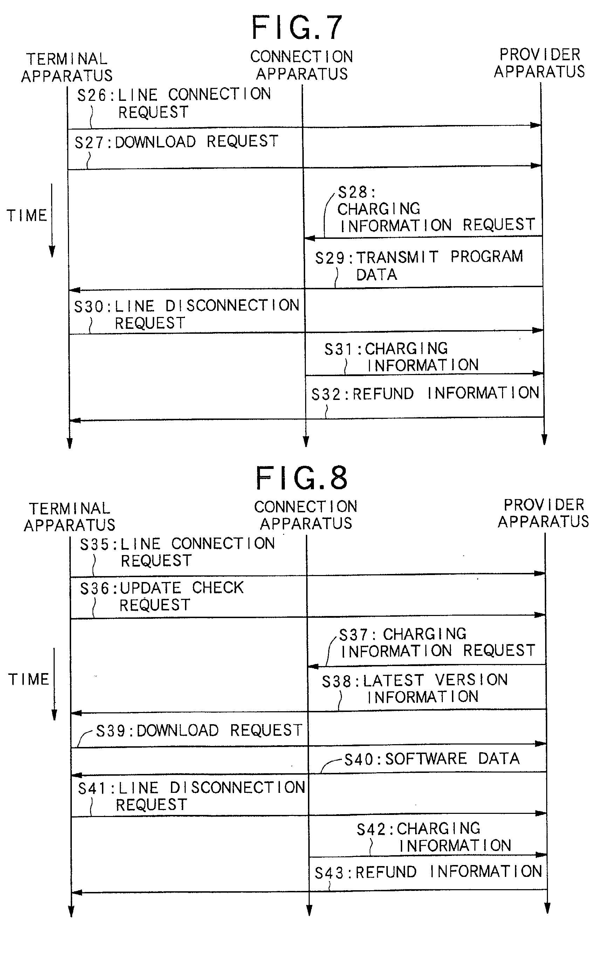

A fourth embodiment of the present invention will next be described with reference to FIG. 7. Additionally, FIG. 7 is a flow diagram showing a flow of information in the network system according to the fourth embodiment.

In the first to third embodiments, the charged destination information indicating that the charged destination is either the terminal apparatus T or the provider apparatus SP is outputted to the charging server 12 in the connection apparatus CN, the charged destination is thus designated, and the communication fee is levied. In the fourth embodiment described hereinafter, when the program necessary for playing the game is transmitted to the terminal apparatus T from the provider apparatus SP during the transmission/reception of the data for the game between the terminal apparatus T and the provider apparatus SP, the charged destination of the communication fee is set to the terminal apparatus T side similarly as in the conventional method. After the program is transmitted, the communication fee paid by the terminal apparatus T is returned to the terminal apparatus T side from the provider apparatus SP side. The present invention is applied to this charging control processing in the fourth embodiment.

Additionally, the whole constitution of the network system and the detailed constitution of each member constituting the network system according to the fourth embodiment are identical to those described in the first embodiment with reference to FIGs. 1 to 3. Therefore, the fourth embodiment will be described with reference to FIGs. 1 to 3 as such, and the detailed description of each constitution is omitted.

As shown in FIG. 7, in the transmission of the program necessary for playing the game, first the terminal apparatus T requests the provider apparatus SP via the telephone line L to establish the connection between the provider apparatus SP and the terminal apparatus T via the telephone line L (step S26). Furthermore, after the connection is established, a request to transmit the necessary program is transmitted to the provider apparatus SP via the telephone line L (step S27).

Subsequently, the service server 16 and fee determination server 18 in the provider apparatus SP having received the transmission request perform a processing such as the identification of the user (customer) having the terminal apparatus T having transmitted the transmission request and the defining of the requested program. In this case, the identification processing is performed by the transmission/reception of the information between the customer database 19 and the fee determination server 18. On the other hand, the defining processing of the program is performed by the transmission/reception of the information between the service database 17 and the service server 16.

Thereafter, a request to transmit charging information indicating an amount of the communication fee generated during the transmission of the program to the terminal apparatus T based on the result of the processing such as the defining to the provider apparatus SP is outputted to the charging server 12 in the connection apparatus CN via the telephone line L (step S28). Thereby, the charging server 12 performs the setting in the charging database 13 such that the charged destination of the communication fee generated by the transmission processing of the program executed thereafter is the terminal apparatus T side and the amount is transmitted as the charging information to the provider apparatus SP.

Subsequently, the provider apparatus SP transmits the necessary program to the terminal apparatus T via the telephone line L (step S29). The terminal apparatus T judges that the transmission ends, and transmits the line disconnection request for breaking the current established connection with the provider apparatus SP to the provider apparatus SP via the telephone line L (step S30).

Next, the connection apparatus CN transmits the amount of the communication fee required during the transmission of the program as the charging information to the provider apparatus SP side based on the charging information request received in the step S28 (step S31). Thereby, the provider apparatus SP transmits the amount of the returned communication fee as return information to the user of the terminal apparatus T (step S32), and ends the series of charging control processing.

Thereafter, the amount of money to be returned to the user is paid to the user from the service provider.

As described above, according to the charging control processing in the network system N of the fourth embodiment, since the charging status of the communication fee generated during the execution of the transmission is controlled in accordance with the status of transmission of the program via the telephone line L, the optimum and fair charging can be performed in accordance with the status of the transmission.

Moreover, since the communication fee generated during the transmission of the program to the terminal apparatus T is charged to the terminal apparatus T side, and the same amount as the charged amount is returned to the terminal apparatus T side from the service provider, the transmission of the program to the terminal apparatus T can be promoted.

### (V) Fifth Embodiment

A fifth embodiment of the present invention will next be described with reference to FIG. 8. Additionally, FIG. 8 is a flow diagram showing a flow of information in the network system according to the fifth embodiment.

In the fourth embodiment, the charging control processing in transmitting the program for playing the game from the provider apparatus SP and playing the game has been described. In the fifth embodiment described hereinafter, the present invention is applied to the charging control processing in updating the program for use in the processing executed in the terminal apparatus T.

Additionally, the whole constitution of the network system and the detailed constitution of each member constituting the network system according to the fifth embodiment are identical to those described in the first embodiment with reference to FIGs. 1 to 3. Therefore, the fifth embodiment will be described with reference to FIGs. 1 to 3 as such, and the detailed description of each constitution is omitted.

As shown in FIG. 8, in the program update processing of the fifth embodiment, first the terminal apparatus T requests the provider apparatus SP via the telephone line L to establish the connection between the provider apparatus SP and the terminal apparatus T via the telephone line L (step S35). Furthermore, after the connection is established, a request to update the program in the terminal apparatus T is transmitted to the provider apparatus SP via the telephone line L (step S36).

Subsequently, the service server 16 and fee determination server 18 in the provider apparatus SP having received the update request perform a processing such as the identification of the user (customer) having the terminal apparatus T having transmitted the update request and the check of the update situation of the requested program. In this case, the identification processing is performed by the transmission/reception of the information between the customer database 19 and the fee determination server 18. On the other hand, the check processing of the update situation of the program is performed by the transmission/reception of the information between the service database 17 and the service server 16.

Thereafter, a request to transmit the charging information indicating an amount of the communication fee generated during the transmission of the program for the update to the terminal apparatus T based on the result of the processing such as the identification to the provider apparatus SP is outputted to the charging server 12 in the connection apparatus CN via the telephone line L (step S37). Thereby, the charging server 12 performs the setting in the charging database 13 such that the charged destination of the communication fee generated by the transmission processing of the program for the update executed hereinafter is the terminal apparatus T side and the amount is transmitted as the charging information to the provider apparatus SP.

Subsequently, the service server 16 in the provider apparatus SP transmits the result of the check processing of the update situation as the latest version information to the terminal apparatus T via the telephone line L and connection apparatus CN (step S38).

Thereafter, the terminal apparatus T having acquired the latest version information compares the update situation included therein with the version information of the program disposed in the terminal apparatus T, and checks whether or not to update the program. Subsequently, it is judged that the program is to be updated. Then, the terminal apparatus requests the provider apparatus SP via the telephone line L to transmit the program for the update to the terminal apparatus T (step S39).

Subsequently, the service server 16 in the provider apparatus SP having received the transmission request transmits the necessary program for the update (shown as the software data in FIG. 8) to the terminal apparatus T via the telephone line L (step S40). Furthermore, the terminal apparatus T judges that the transmission ends, and transmits the line disconnection request for breaking the current established connection with the provider apparatus SP to the provider apparatus SP via the telephone line L (step S41).

Thereafter, the transmitted program for the update is used to update the program in the terminal apparatus T.

Next, the connection apparatus CN transmits the amount of the communication fee required during the transmission of the program for the update as the charging information to the provider apparatus SP side based on the charging information request received in the step S37 (step S42). Thereby, the provider apparatus SP transmits the amount of the returned communication fee as the return information to the user of the terminal apparatus T (step S43), and ends the series of charging control processing.

Thereafter, the amount of money to be returned to the user is paid to the user from the service provider.

As described above, according to the charging control processing in the network system N of the fifth embodiment, the fee is once charged to the terminal apparatus T side in accordance with the transmission status of the program for the update via the telephone line L, and the same amount as that of the charged money is returned later to the terminal apparatus T side from the service provider. Therefore, the optimum and fair charging can be performed in accordance with the status of the transmission processing of the program for the update.

Furthermore, since the charging status is controlled based on the acquired price of the program for the update, not the use time of the telephone line L, the charging status can more appropriately be controlled.

### (VI) Sixth Embodiment

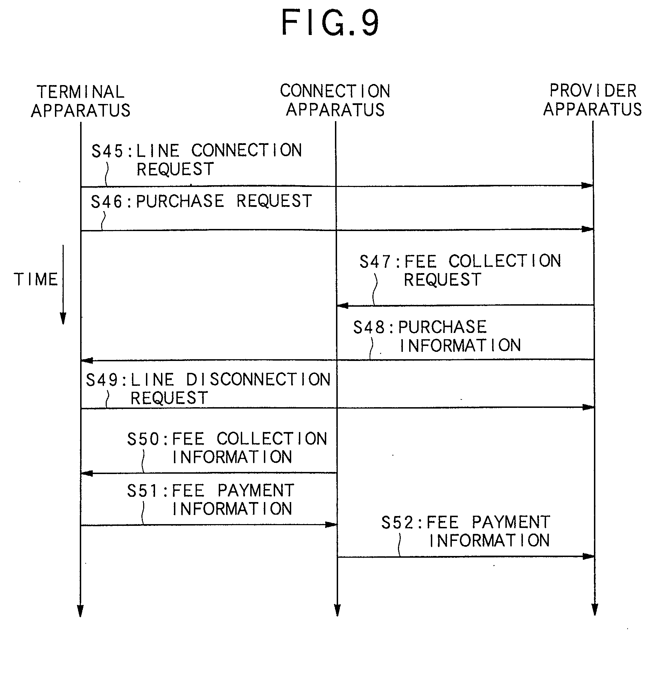

A sixth embodiment of the present invention will next be described with reference to FIG. 9. Additionally, FIG. 9 is a flow diagram showing a flow of information in the network system according to the sixth embodiment.

In the fourth and fifth embodiments, the charging control processing in transmitting the program for playing the game from the provider apparatus SP and playing the game or in updating the program in the terminal apparatus T has been described. In the sixth embodiment described hereinafter, the present invention is applied to the charging control processing in purchasing the commodity provided in the provider apparatus SP by the user having the terminal apparatus T.

Additionally, the whole constitution of the network system and the detailed constitution of each member constituting the network system according to the sixth embodiment are identical to those described in the first embodiment with reference to FIGs. 1 to 3. Therefore, the sixth embodiment will be described with reference to FIGs. 1 to 3 as such, and the detailed description of each constitution is omitted.

As shown in FIG. 9, in the commodity purchase processing of the sixth embodiment, first the terminal apparatus T requests the provider apparatus SP via the telephone line L to establish the connection between the provider apparatus SP and the terminal apparatus T via the telephone line L (step S45). Furthermore, after the connection is established, the terminal apparatus T transmits a request to purchase the commodity to the provider apparatus SP via the telephone line L (step S46).

Subsequently, the service server 16 and fee determination server 18 in the provider apparatus SP having received the purchase request perform a processing such as the identification of the user (customer) having the terminal apparatus T having transmitted the purchase request and the check of the requested purchase commodity. In this case, the identification processing is performed by the transmission/reception of the information between the customer database 19 and the fee determination server 18. On the other hand, the check processing of the purchase commodity is performed by the transmission/reception of the information between the service database 17 and the service server 16.

Thereafter, a request indicating that the communication fee generated during the transmission/reception of the information necessary for the purchase processing of the commodity and the price of the commodity based on the result of the identification processing are paid by the telephone corporation having the connection apparatus CN in lieu of the service provider is transmitted to the connection apparatus CN (step S47). Additionally, this request also includes information indicating the amount of the price of the commodity. Thereby, the charging server 12 performs the setting in the charging database 13 such that the communication fee generated by the processing executed thereafter and the price of the commodity should be collected.

Subsequently, the provider apparatus SP transmits the information to be transmitted to the terminal apparatus T during the purchase of the commodity as purchase information to the terminal apparatus T via the telephone line L and connection apparatus CN (step S48), and the terminal apparatus T having received the purchase information uses the purchase information to perform the purchase processing of the necessary commodity.

Thereafter, the terminal apparatus T judges that the purchase processing ends, and transmits the line disconnection request for breaking the current established connection with the provider apparatus SP to the provider apparatus SP via the telephone line L (step S49).

Subsequently, after another line is established, the connection apparatus CN transmits the information indicating the amount to be collected by the telephone corporation (i.e., the use fee of the telephone line L to be paid to the telephone corporation and the total amount of the price of the commodity to be paid to the provider apparatus SP) as fee collection information to the terminal apparatus T (step S50). Moreover, in response to the fee collection information, the terminal apparatus T transmits fee payment information indicating that the user having the terminal apparatus T has paid the amount of money included in the fee collection information to the connection apparatus CN (step S51). Then, among the fee payment information, the connection apparatus CN transmits the fee payment information indicating the price of the commodity to be paid to the service provider having the provider apparatus SP to the provider apparatus SP (step S52). Thereby, the service provider recognizes that the price of the commodity sold by the provider has been paid.

As described above, according to the charging control processing in the network system N of the sixth embodiment, since the charging status of the necessary communication fee is controlled in accordance with the purchase processing of the commodity via the telephone line L, the optimum and fair charging can be performed during the purchase of the commodity.

Moreover, since the charging status is controlled based on the purchase price of the commodity, not the use time of the telephone line L, the charging status can more appropriately be controlled.

Furthermore, the charging status is controlled so that the telephone corporation collects the communication fee generated by the transmission/reception of the information necessary for the purchase of the commodity and the price of the commodity from the terminal apparatus T. Therefore, the charging can be performed in the status suitable for the purchase of the commodity via the telephone line L.

### (VII) Seventh Embodiment

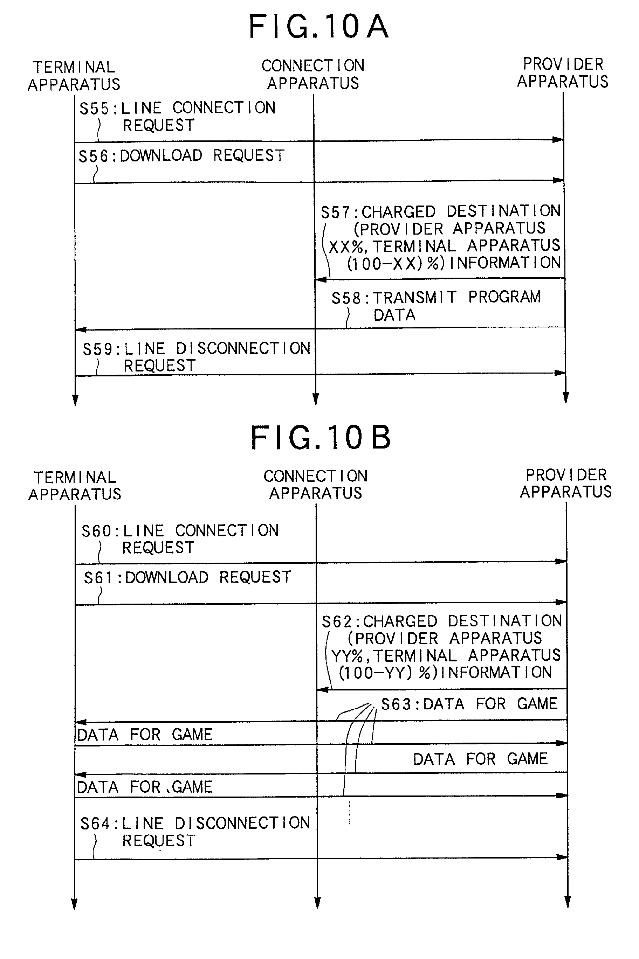

A seventh embodiment of the present invention will next be described with reference to FIG. 10. Additionally, FIG. 10 is a flow diagram showing a flow of information in the network system according to the seventh embodiment.

In the first to sixth embodiments, the charging control processing performed in various types of information processing has been described, while the charged destination is only one of the terminal apparatus T side and provider apparatus SP side. In the seventh embodiment described hereinafter, the present invention is applied to the charging control processing in charging the fee to both the terminal apparatus T side and the provider apparatus SP side with a constant charging ratio, when the transmission/reception of the program and the data for the game is performed between the terminal apparatus T and the step S and the game is played.

Additionally, the whole constitution of the network system and the detailed constitution of each member constituting the network system according to the seventh embodiment are identical to those described in the first embodiment with reference to FIGs. 1 to 3. Therefore, the seventh embodiment will be described with reference to FIGs. 1 to 3 as such, and the detailed description of each constitution is omitted.

Similarly as the first embodiment shown in FIG. 4A, the processing in the step of the transmission of the program for the game to the terminal apparatus T from the provider apparatus SP will be described with reference to FIG. 10A.

As shown in FIG. 10A, in the transmission step of the necessary program, first the terminal apparatus T requests the provider apparatus SP via the telephone line L to establish the connection between the provider apparatus SP and the terminal apparatus T via the telephone line L (step S55). Furthermore, after the connection is established, the terminal apparatus requests the provider apparatus SP via the telephone line L to transmit the necessary program (step S56).

Subsequently, the service server 16 and fee determination server 18 in the provider apparatus SP having received the transmission request perform a processing such as the identification of the user (customer) having the terminal apparatus T having transmitted the transmission request and the defining of the requested program. In this case, the identification processing is performed by the transmission/reception of the information between the customer database 19 and the fee determination server 18. On the other hand, the defining processing of the program is performed by the transmission/reception of the information between the service database 17 and the service server 16.

Thereafter, for the charged destination of the communication fee generated during the transmission of the program to the terminal apparatus T based on the result of the processing such as the defining, the charged destination information indicates that a part (represented by "XX%" in FIG. 10A) of the communication fee is charged to the provider apparatus SP side and another part (represented by (100-XX)% in FIG. 10A) of the communication fee is charged to the terminal apparatus T side. The charged destination information is outputted to the charging server 12 in the connection apparatus CN via the telephone line L (step S57). Thereby, the charging server 12 performs the setting in the charging database 13 such that the charged destination of the communication fee generated in the transmission processing of the program executed thereafter is the provider apparatus SP for a part of the fee (XX%) and the terminal apparatus T for another part ((100-XX)%).

Finally, the provider apparatus SP transmits the necessary program to the terminal apparatus T via the telephone line L (step S58). The terminal apparatus T judges that the transmission ends, transmits the line disconnection request for breaking the current established connection with the provider apparatus SP to the provider apparatus SP via the telephone line L (step S59), and completes the series of charging control processing.

The processing of the step of playing the actual game during the transmission/receiving of the information with respect to the provider apparatus SP using the transmitted program for a charged fee will next be described with reference to FIG. 10B.

As shown in FIG. 10B, in the playing step of the game using the transmitted program, first the terminal apparatus T requests the provider apparatus SP via the telephone line L to reestablish the connection between the provider apparatus SP and the terminal apparatus T via the telephone line L (step S60). Furthermore, after the connection is established, the terminal apparatus requests the provider apparatus SP via the telephone line L to start the game, that is, transmit the data for the game (step S61).

Subsequently, the service server 16 and fee determination server 18 in the provider apparatus SP having received the transmission request perform a processing such as the identification of the user (customer) having the terminal apparatus T having transmitted the transmission request and the defining of the requested data for the game. In this case, similarly as shown in FIG. 10A, the identification processing is performed by the transmission/reception of the information between the customer database 19 and the fee determination server 18. On the other hand, the defining processing of the data for the game is performed by the transmission/reception of the information between the service database 17 and the service server 16.

Thereafter, for the charged destination of the communication fee generated during the transmission of the data for the game to the terminal apparatus T based on the result of the processing such as the defining, the charged destination information indicates that a part (represented by "YY%" in FIG. 10B) of the communication fee is charged to the provider apparatus SP side and another part (represented by (100-YY)% in FIG. 10B) of the communication fee is charged to the terminal apparatus T side. The charged destination information is outputted to the charging server 12 in the connection apparatus CN via the telephone line L (step S62). Thereby, the charging server 12 performs the setting in the charging database 13 such that the charged destination of the communication fee generated in the transmission/reception processing of the data for the game executed thereafter is the provider apparatus SP for a part of the fee (YY%) and the terminal apparatus T for another part ((100-YY)%).

Subsequently, the actually necessary data for the game is transmitted/received between the terminal apparatus T and the provider apparatus SP in accordance with the progress of the game and the game is played (step S63). After the game ends, the terminal apparatus transmits the line disconnection request for breaking the current established connection with the provider apparatus SP to the provider apparatus SP via the telephone line L (step S64), and completes the series of charging control processing.

Thereafter, based on the charged destination information, the telephone corporation having the connection apparatus CN uses the conventional method to charge the communication fee indicating the amount corresponding to each charging ratio to the service provider having the provider apparatus SP and the user having the terminal apparatus T.

As described above, according to the charging control processing in the network system N of the seventh embodiment, the charging status of the communication fee generated during the execution of the transmission is controlled in accordance with the status of the transmission of the program or the data for the game via the telephone line L. Therefore, the optimum and fair charging can be performed in accordance with the status of the transmission.

Moreover, the communication fee generated during the transmission of the program to the terminal apparatus T and the communication fee generated during the transmission processing of the data for the game are charged to the provider apparatus SP side and terminal apparatus T side based on the constant charging ratio. Therefore, the use of the program is promoted.

### (VIII) Eighth Embodiment

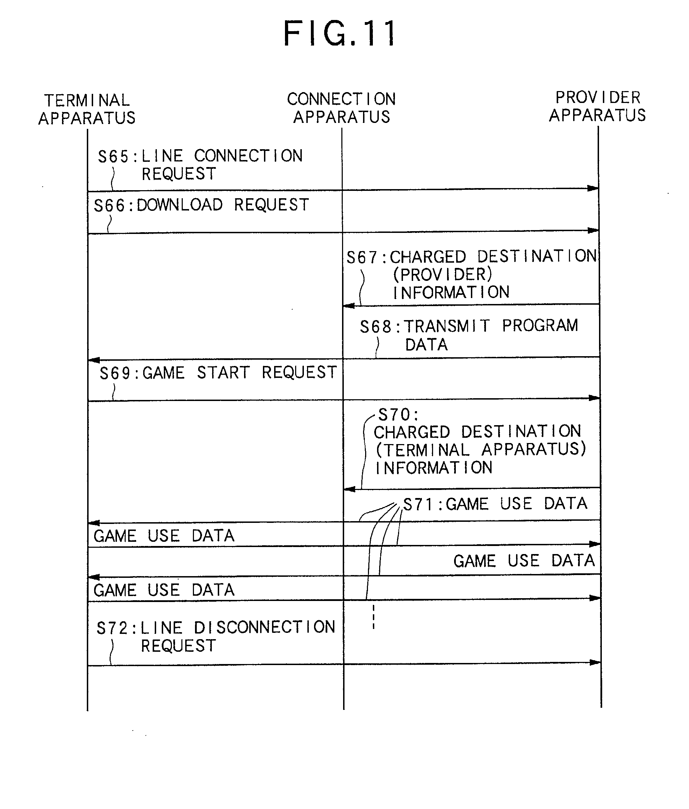

An eighth embodiment of the present invention will next be described with reference to FIG. 11. Additionally, FIG. 11 is a flow diagram showing a flow of information in the network system according to the eighth embodiment.

In the seventh embodiment, the charging control processing including the processing for disconnecting the telephone line L between the transmission step of the program for the game and the playing step of the actual game has been described in the case in which the transmission/reception of the data is performed between the terminal apparatus T and the provider apparatus SP and the game is played. In the eighth embodiment described hereinafter, the present invention is applied to the charging control processing in which the transmission step and execution step are executed as a series of flow.

Additionally, the whole constitution of the network system and the detailed constitution of each member constituting the network system according to the eighth embodiment are identical to those described in the first embodiment with reference to FIGs. 1 to 3. Therefore, the eighth embodiment will be described with reference to FIGs. 1 to 3 as such, and the detailed description of each constitution is omitted.

As shown in FIG. 11, in the charging control processing of the eighth embodiment, first the terminal apparatus T requests the provider apparatus SP via the telephone line L to establish the connection between the provider apparatus SP and the terminal apparatus T via the telephone line L (step S65). Furthermore, after the connection is established, the terminal apparatus requests the provider apparatus SP via the telephone line L to transmit the necessary program (step S66).

Subsequently, the service server 16 and fee determination server 18 in the provider apparatus SP having received the transmission request perform a processing such as the identification of the user (customer) having the terminal apparatus T having transmitted the transmission request and the defining of the requested program. In this case, the identification processing is performed by the transmission/reception of the information between the customer database 19 and the fee determination server 18. On the other hand, the defining processing of the program is performed by the transmission/reception of the information between the service database 17 and the service server 16.

Thereafter, the charged destination information indicating that the charged destination of the communication fee generated during the transmission of the program to the terminal apparatus T based on the result of the processing such as the defining is set to the provider apparatus SP side is outputted to the charging server 12 in the connection apparatus CN via the telephone line L (step S67). Thereby, the charging server 12 performs the setting in the charging database 13 such that the charged destination of the communication fee generated in the transmission processing of the program executed thereafter is the provider apparatus SP.

Subsequently, the provider apparatus SP transmits the necessary program to the terminal apparatus T via the telephone line L (step S68). The terminal apparatus T judges that the transmission ends, and subsequently requests the start of the game. That is the terminal apparatus transmits the request for the transmission of the data for the game to the provider apparatus SP via the telephone line L (step S69).

Subsequently, the service server 16 and fee determination server 18 in the provider apparatus SP having received the transmission request perform a processing such as the identification of the user (customer) having the terminal apparatus T having transmitted the transmission request and the defining of the requested data for the game. In this case, similarly as shown in FIG. 10A, the identification processing is performed by the transmission/reception of the information between the customer database 19 and the fee determination server 18. On the other hand, the defining processing of the data for the game is performed by the transmission/reception of the information between the service database 17 and the service server 16.

Thereafter, the charged destination information indicating that for the charged destination of only the communication fee generated during the transmission of the data for the game to the terminal apparatus T based on the result of the processing such as the defining is the terminal apparatus T side is outputted to the charging server 12 in the connection apparatus CN via the telephone line L (step S70). Thereby, the charging server 12 performs the setting in the charging database 13 such that the charged destination of the communication fee generated by the transmission/reception processing of the data for the game executed thereafter is the terminal apparatus T.

Subsequently, the actually necessary data for the game is transmitted/received between the terminal apparatus T and the provider apparatus SP in accordance with the progress of the game and the game is played (step S71). After the game ends, the terminal apparatus transmits the line disconnection request for breaking the current established connection with the provider apparatus SP to the provider apparatus SP via the telephone line L (step S72), and completes the series of charging control processing.

Thereafter, based on the charged destination information, the telephone corporation having the connection apparatus CN uses the conventional method to charge the communication fee generated during the transmission of the program to the service provider having the provider apparatus SP. Similarly, the telephone corporation charges the communication fee generated during the transmission of the data for the game to the user having the terminal apparatus T.

As described above, according to the charging control processing in the network system N of the eighth embodiment, the charging status of the communication fee generated during the execution of the transmission is controlled in accordance with the status of the transmission of the program or the data for the game via the telephone line L. Therefore, the optimum and fair charging can be performed in accordance with the status of the transmission.

Moreover, the communication fee generated during the transmission of the program to the terminal apparatus T is charged to the provider apparatus SP side. Furthermore, the communication fee generated during the transmission processing of the data for the game is charged to the terminal apparatus T side. Since the charging is continuously controlled, the use of the program can be promoted.

Additionally, since the charging status is controlled in accordance with the progress of the game such as the transmission step of the program and the execution step of the game, the charging status can be controlled appropriately for each game.

### (IX) Ninth Embodiment

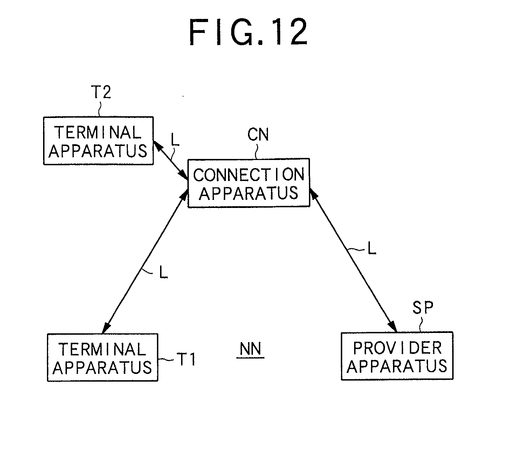

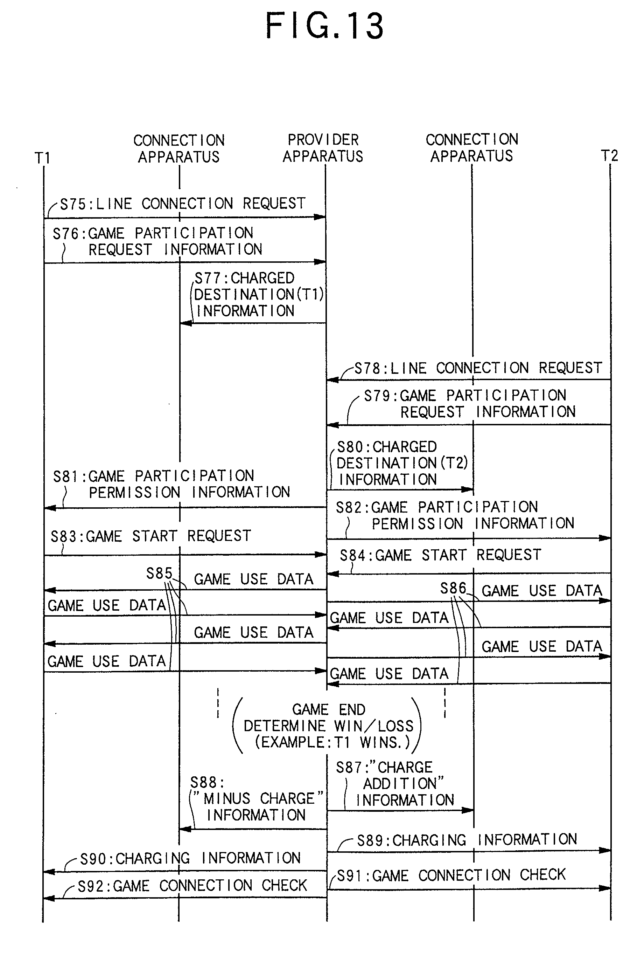

Finally, a ninth embodiment of the present invention will be described with reference to FIGs. 12 and 13. Additionally, FIG. 12 is a block diagram showing the whole constitution of the network system according to the ninth embodiment, and FIG. 13 is a flow diagram showing the flow of information in the network system of the ninth embodiment.

In the above-described sixth and seventh embodiments, the transmission/reception of the data is performed between the terminal apparatus T and the provider apparatus SP while the game is played. In the ninth embodiment described hereinafter, the present invention is applied to the charging control processing in which two terminal apparatuses are connected to the provider apparatus SP via the connection apparatus CN and a fighting game (hereinafter referred to simply as the game in the ninth embodiment) is played between two terminal apparatuses.

First, the constitution of the network system according to the ninth embodiment will be described with reference to FIG. 12.

As shown in FIG. 12, a network system NN of the ninth embodiment is constituted of: terminal apparatuses T1 and T2 which have the same constitution as that of the terminal apparatus T in the constitution of the network system N according to the first to eighth embodiments; the connection apparatus CN and provider apparatus SP constituted similarly as in the constitution of the network system N; and the telephone line L for connecting the respective constituting members to one another.

In this case, the terminal apparatuses T1 and T2 can transmit/receive the information with respect to the provider apparatus SP via the connection apparatus CN and telephone line L in the same manner.

The status of the transmission/reception of the information relating to the game executed in the network system NN will next be described concretely with reference to FIG. 13. Additionally, in FIG. 13, respective portions of the single connection apparatus CN functioning for the terminal apparatuses T1 and T2 are separately shown for the same of convenience in the description.

Moreover, in the ninth embodiment, the user having the terminal apparatus T1 wins the game and the communication fee to be charged to the user of the terminal apparatus T1 is borne by the user side having the terminal apparatus T2 in the game. This case will be described hereinafter.

As shown in FIG. 13, according to the charging control processing of the ninth embodiment, first the terminal apparatus T1 requests the provider apparatus SP via the telephone line L to establish the connection between the provider apparatus SP and the terminal apparatus T1 via the telephone line L (step S75). Furthermore, after the connection is established, the terminal apparatus transmits a request for participation in the game of the ninth embodiment to the provider apparatus SP via the telephone line L (step S76).

Thereby, the service server 16 and fee determination server 18 in the provider apparatus SP having received the request perform a processing such as the identification of the user (customer) having the terminal apparatus T1 having transmitted the request and the defining of the requested fighting program. In this case, the identification processing is performed by the transmission/reception of the information between the customer database 19 and the fee determination server 18. On the other hand, the defining processing of the program is performed by the transmission/reception of the information between the service database 17 and the service server 16.

Thereafter, the charged destination information is outputted to the charging server 12 in the connection apparatus CN via the telephone line L (step S77). The information indicates that the charged destination of the communication fee generated by the transmission/reception of the information with the terminal apparatus T1 is the terminal apparatus T1 during the execution of the game based on the result of the processing such as the defining. Thereby, the charging server 12 performs the setting in the charging database 13 such that the charged destination of the communication fee generated by the transmission/reception of the information with the terminal apparatus T1 is the terminal apparatus T1 in the game executed thereafter.

Subsequently, the terminal apparatus T2 requests the provider apparatus SP to establish the connection between the provider apparatus SP and the terminal apparatus T2 via the telephone line L (step S78). Furthermore, after the connection is established, the terminal apparatus transmits the request for the partition in the game of the ninth embodiment to the provider apparatus SP via the telephone line L (step S79).

Thereby, the service server 16 and fee determination server 18 in the provider apparatus SP having received the request perform a processing such as the identification of the user and the defining of the requested game program similarly as in the reception of each request from the terminal apparatus T1.

Thereafter, the charged destination information is outputted to the charging server 12 in the connection apparatus CN via the telephone line L (step S80). The information indicates that the charged destination of the communication fee generated by the transmission/reception of the information with the terminal apparatus T2 is the terminal apparatus T2 side during the execution of the game based on the result of the processing such as the defining. Thereby, the charging server 12 performs the setting in the charging database 13 such that the charged destination of the communication fee generated by the transmission/reception of the information with the terminal apparatus T2 is the terminal apparatus T2 in the game executed thereafter.

Subsequently, when two fighters necessary for playing the game are present, the provider apparatus SP transmits game participation permission information to the terminal apparatuses T1 and T2, respectively (steps S81 and S82).

After the terminal apparatuses T1 and T2 receive the game participation permission information, the terminal apparatuses T1 and T2 request the start of the game. That is, the terminal apparatus transmits the request for the transmission of the data for the game to the provider apparatus SP via the telephone line L (steps S83 and 84).

Subsequently, after the provider apparatus SP recognizes the participation request, the terminal apparatuses T1 and T2 and the provider apparatus SP perform the transmission/reception of the actually necessary data for the game in accordance with the progress of the game and play the game (steps S85, S86).

Moreover, the provider apparatus SP judges that the user having the terminal apparatus T1 or the user having the terminal apparatus T2 wins based on the content of the information transmitted/received during the execution of the game. Additionally, in the following description, it is assumed that the user having the terminal apparatus T1 wins the game.

Thereafter, the game ends, it is recognized that the user having the terminal apparatus T1 has won the game, and the provider apparatus SP transmits the charged destination information to the connection apparatus CN (step S87). The information indicates that the communication fee required during the transmission/reception of the information between the provider apparatus SP and the terminal apparatus T1 during the execution of the game is added to the charged amount to the user having the terminal apparatus T2. Thereby, the charging server 12 in the connection apparatus CN performs the setting in the charging database 13 such that the communication fee is added to the charged amount to the terminal apparatus T2.

Subsequently, the game similarly ends, it is recognized that the user having the terminal apparatus T1 has won the game, and the provider apparatus SP transmits the charged destination information to the connection apparatus CN (step S88). The information indicates that the communication fee required during the transmission/reception of the information between the provider apparatus SP and the terminal apparatus T1 during the execution of the game is subtracted from the charged amount to the user having the terminal apparatus T2. Thereby, the charging server 12 in the connection apparatus CN performs the setting in the charging database 13 such that the communication fee is subtracted from the charged amount to the terminal apparatus T1.

Thereafter, the provider apparatus SP transmits the charging information indicating the charged amount set in the step S87 to the terminal apparatus T2 (step S89), and also transmits the charging information indicating the charged amount set in the step S88 to the terminal apparatus T1 (step S90).

Subsequently, the provider apparatus transmits the information for checking whether or not to continue the game to the terminal apparatuses T1 and T2 (steps S91 and S92).

Thereafter, when the terminal apparatus T1 or T2 transmits the information indicating the continuation in response to the information for checking the continuation, the processing returns to the step S83 or S84, and the above-described processing is repeated.

On the other hand, when the terminal apparatus T1 or T2 transmits the information indicating that the game is not continued in response to the information for checking the continuation, the provider apparatus transmits the information indicating that the connection of the game is impossible any more to the terminal apparatuses T1 and T2. The line connection between the provider apparatus SP and the terminal apparatuses T1 and T2 is broken and the series of game as well as the charging control processing end.

As described above, according to the charging control processing in the network system NN of the ninth embodiment, the charging status of the communication fee generated during the execution of the transmission is controlled in accordance with the status of the execution of the game via the telephone line L. Therefore, the optimum and fair charging can be performed in accordance with the status of the transmission.

Moreover, since the charging status is controlled based on the win/loss of the game, the charging status is controlled more fairly and an interest in the game is increased.

Furthermore, the charging status is controlled so that the communication fee to be borne by the winner of the game is smaller than the communication fee to be borne by the loser of the game, and therefore the interest in the game is further increased.

Additionally, in the above-described ninth embodiment, the communication fee necessary for executing the game is charged to either the user having the terminal apparatus T1 or the user having the terminal apparatus T2. Additionally, a constitution similar to that of the seventh embodiment is also possible in which a part of the communication fee charged to the user is charged to the service provider. In this case, in the steps S77 and 80, the ratio to be borne by the provider apparatus SP is notified to the connection apparatus CN.

### (X) Modification Example

Modification examples of the present invention will next be described.

In the respective embodiments, the communication fee charged corresponding to the communication time is split for the terminal apparatus T, the terminal apparatuses T1 and T2, or the provider apparatus SP. Additionally, as a first modification example, the communication fee corresponding to the amount of actually transmitted/received information is used as the object of the charging instead of the communication fee corresponding to the communication time and the charging control may be performed and constituted as described in the embodiments.

In this case, since the charging status is controlled based on the information amount of the transmitted/received information instead of the use time of the telephone line L, the charging status can more appropriately be controlled.

Subsequently, as a second modification example, when the service provider provides the information including advertisement, and the terminal apparatus T receives the information, the fee of the information other than the advertisement is charged to the terminal apparatus T side, and the fee of the presented advertisement is charged to the provider apparatus SP side.

In this constitution, since the communication fee for transmitting the advertisement to be outputted in the terminal apparatus T to the terminal apparatus T is borne by the provider apparatus SP side, the charging status can be controlled more appropriately and fairly.

Furthermore, as a third modification example, when the game is performed using the telephone line L, and the use fee of the game is charged in addition to the communication fee, the charged fee to the user is reduced/exempted based on the progress of the game (such as points of the obtained score, the number of passed game scenes, and the like). The reduced/exempted fee can be borne by the service provider side.

In this constitution, since the charging status is controlled in accordance with the progress of the game, the charging status can be controlled more appropriately for each game, and a will to participate in the game of the user of the terminal apparatus T can be enhanced.

Furthermore, as a fourth modification example, when the provider apparatus SP supplies music information or image information to the terminal apparatus T, the communication fee for transmitting the music information or the image information is charged to the terminal apparatus T side. For specific music or image information (such as information being advertised before put on sale, information distributed in connection with a sale promotion event, and the like), the service provider side bears a part of the communication fee, and the remaining fee may be charged to the terminal apparatus T side.

Moreover, as a fifth modification example, the provider apparatus SP distributes catalog information including the content and price of the commodity to the terminal apparatus T, and the user having the terminal apparatus T selects a desired commodity from the catalog information and performs the purchase processing. In this case, the communication fee necessary for receiving the distributed catalog information by the user is charged to the service provider side in the total amount or at a constant ratio. However, the communication fee necessary for purchasing the commodity as a result of the checking of the catalog information may be charged to the terminal apparatus T side in the total amount.

In this constitution, the fee generated by the transmission/reception of sale information necessary for the sale of the commodity, particularly the catalog information is mainly charged to the provider apparatus SP side. On the other hand, the price of the commodity is charged to the terminal apparatus T side. Since the charging status is controlled in this manner, the charging can be performed in the status suitable for the sale of the commodity via the telephone line L.

Furthermore, as a sixth modification example, the provider apparatus SP distributes the catalog information including the content and price of the commodity to the terminal apparatus T, and the user having the terminal apparatus T selects the desired commodity from the catalog information and performs the purchase processing. In this case, the communication fee necessary for receiving the distributed catalog information by the user is temporarily charged to the terminal apparatus T side. The communication fee necessary for purchasing the commodity as a result of the checking of the catalog information is charged to the terminal apparatus T side in the total amount. Furthermore, the communication fee required for distributing the catalog information may be subtracted from the purchase price, when the fee is charged.

Additionally, as a seventh modification example, the provider apparatus SP distributes the catalog information including the content and price of the commodity to the terminal apparatus T, and the user having the terminal apparatus T selects the desired commodity from the catalog information and performs the purchase processing. In this case, the communication fee necessary for the user to transmit the information requesting the distribution of the catalog information to the provider apparatus SP is charged to the terminal apparatus T side. On the other hand, the communication fee necessary for the provider apparatus SP to actually distribute the catalog information may be charged to the service provider.

In this constitution, since the communication fee generated during the actual distribution of the catalog information having a large information amount to be transmitted is charged to the service provider side, the charging can be performed in the status more suitable for the actual sale of the commodity.

Moreover, as an eighth modification example, the service provider performs a so-called char service via the telephone line L, and the communication fee generated during the use of the chat service is charged to a plurality of users having terminal apparatuses T, respectively. In this case, the charging ratio is set such that the charging ratio of a male user is higher than the charging ratio of a female user, and the use of the chat service can be promoted.

Finally, as a ninth modification example, the service provider performs a notice board service via the telephone line L. When the amount of the information shown in the notice board increases, that is, when not only characters but also photographs and individual electronic mail addresses are opened to the public, the charging ratio to the user may be reduced in accordance with the opened information amount. In this constitution, the use of the notice board service can be promoted.

Additionally, the program corresponding to the flow diagrams shown in FIGs. 4 to 11 and 13 is classified for the connection apparatus CN, terminal apparatus T, and provider apparatus SP, and separately recorded, for example, in a flexible disk or a hard disk. The program is read out and executed by the charging server 12 in the connection apparatus CN, the controller 6 in the terminal apparatus T, or the service server 16 in the provider apparatus SP. In this constitution, the same charging control processing as the processing of the above-described embodiments and modification examples may also be executed.

## Claims

1. A charging control apparatus **characterized by**:
a charging control device (18) which controls a charging status of a fee generated in executing an information processing realized by performing transmission/reception of information between a server apparatus (SP) and at least one terminal apparatus (T) via a network (L) in accordance with at least one of a processing status in said information processing and a status of the transmission/reception of said information; and
a charging device (12) which charges the fee controlled by said charging control device (18) to at least one of said server apparatus (SP) and said terminal apparatus (T).

2. The charging control apparatus according to claim 1,
wherein said charging control device (18) which controls said charging status in accordance with the status of the transmission/reception of said information controls said charging status based on an information amount of said transmitted/received information.

3. The charging control apparatus according to claim 2,
wherein said information includes at least advertisement information indicating a content of advertisement to be outputted in said terminal apparatus (T), and
said charging control device(18) which controls said charging status based on the information amount of said transmitted/received information charges said borne fee corresponding to the information amount of said advertisement information to said server apparatus (SP).

4. The charging control apparatus according to any one of claims 1 to 3,
wherein said information processing is a game executed while said information is transmitted/received between said server apparatus(SP) and said terminal apparatus (T) via said network (L), and
said charging control device (18) which controls said charging status in accordance with the processing status in said information processing controls said charging status based on a win/loss of said game.

5. The charging control apparatus according to claim 4,
wherein said charging control device (18) controls said charging status so that said fee to be borne by a winner of said game is smaller than said fee to be borne by a loser of said game.

6. The charging control apparatus according to claim 4 or 5,
wherein said charging control device (18) controls said charging status based on a content of said game.

7. The charging control apparatus according to any one of claims 1 to 3,
wherein said information is at least one of program and data to be used in said terminal apparatus (T), said information processing is a transmission processing to transmit said one to said terminal apparatus (T) from said server apparatus (SP), and
said charging control device (18) which controls said charging status in accordance with the status of the transmission/reception of said information controls said charging status so that said fee generated by the transmission of said one is charged to said server apparatus (SP).

8. The charging control apparatus according to claim 7,
wherein said charging control device (18) which controls said charging status in accordance with the status of the transmission/reception of said information controls said charging status so that a part of said fee generated by the transmission of said one is charged to said terminal apparatus (T).

9. The charging control apparatus according to any one of claims 1 to 3,
wherein said information processing is a sale processing to sell a commodity to a user of said terminal apparatus (T) via said server apparatus (SP), said information is sale information to be transmitted/received during the sale of the commodity, and
said charging control device (18) controls said charging status so that said fee generated by the transmission/reception of said sale information and a price of said commodity are charged to said terminal apparatus (T).

10. The charging control apparatus according to claim 9,
wherein said server apparatus (SP) transmits catalog information for guiding the sale to said terminal apparatus (T) to sell said commodity, and
said charging control device (18) controls said charging status so that said fee generated by the transmission of said catalog information is charged to said server apparatus (SP).

11. A charging control method **characterized by**:
a charging control process of controlling a charging status of a fee generated in executing an information processing realized by performing transmission/reception of information between a server apparatus (SP) and at least one terminal apparatus (T) via a network (L) in accordance with at least one of a processing status in said information processing and a status of the transmission/reception of said information; and
a charging process of charging the fee controlled by said charging control process to at least one of said server apparatus (SP) and said terminal apparatus (T).

12. The charging control method according to claim 11,
wherein said charging control process of controlling said charging status in accordance with the status of the transmission/reception of said information comprises a process of controlling said charging status based on an information amount of said transmitted/received information.

13. The charging control method according to claim 12,
wherein said information includes at least advertisement information indicating a content of advertisement to be outputted in said terminal apparatus (T), and
said charging control process of controlling said charging status based on the information amount of said transmitted/received information comprises a process of charging said borne fee corresponding to the information amount of said advertisement information to said server apparatus (SP).

14. The charging control method according to any one of claims 11 to 13,
wherein said information processing is a game executed while said information is transmitted/received between said server apparatus (SP) and said terminal apparatus (T) via said network (L), and
said charging control process of controlling said charging status in accordance with the processing status in said information processing comprises a process of controlling said charging status based on a win/loss of said game.

15. The charging control method according to claim 14,
wherein said charging control process comprises a process of controlling said charging status so that said fee to be borne by a winner of said game is smaller than said fee to be borne by a loser of said game.

16. The charging control method according to claim 14 or 15,
wherein said charging control process comprises a process of controlling said charging status based on a content of said game.

17. The charging control method according to any one of claims 11 to 13,
wherein said information is at least one of program and data to be used in said terminal apparatus (T), and said information processing is a transmission processing to transmit said one to said terminal apparatus (T) from said server apparatus(SP), and
said charging control process of controlling said charging status in accordance with the status of the transmission/reception of said information comprises a process of controlling said charging status so that said fee generated by the transmission of said one is charged to said server apparatus (SP).

18. The charging control method according to claim 17,
wherein said charging control process of controlling said charging status in accordance with the status of the transmission/reception of said information comprises a process of controlling said charging status so that a part of said fee generated by the transmission of said one is charged to said terminal apparatus (T).

19. The charging control method according to any one of claims 11 to 13,
wherein said information processing is a sale processing to sell a commodity to a user of said terminal apparatus (T) via said server apparatus (SP), said information is sale information to be transmitted/received during the sale of the commodity, and
said charging control process comprises a process of controlling said charging status so that said fee generated by the transmission/reception of said sale information and a price of said commodity are charged to said terminal apparatus (T).

20. The charging control method according to claim 19, further comprising a transmission process of transmitting catalog information for guiding the sale to said terminal apparatus (T) from said server apparatus(SP) to sell said commodity,
wherein said charging control process comprises a process of controlling said charging status so that said fee generated by the transmission of said catalog information is charged to said server apparatus(SP).

21. An information recording medium in which a program for a charging control is recorded so as to be readable by a computer included in said terminal apparatus (T) according to any one of claims 1 to 10,
wherein said program allows said computer to function as:
a execution device which executes said information processing via said network (L); and
a payment device which performs a payment processing to pay said fee charged by said charging device (12).

22. A charging control apparatus **characterized by**:
a charging control device (18) which controls a charging of a fee generated in executing an information processing realized by performing transmission/reception of information between a plurality of computer(SP,T) via a network in accordance with a charged destination Information which indicates a charged destination of said fee and which is transmitted from one of said computers (SP,T); and
a charging device (12) which charges said fee controlled by said charging control device to one or a plurality of said computer (SP,T).

23. A server apparatus (SP), which is included in a charging control system which controls a charging of a fee generated in executing an information processing realized by performing transmission/reception of information between said server apparatus, at least one terminal apparatus and a charging control apparatus (CN) via a network, **characterized by**:
an execution device which execute said information processing via said network (L); and
a charging processing requesting device (18) which transmits a charging processing request, which includes at least one of a processing status in said information processing and a status of the transmission/reception of said information, to said charging control apparatus (CN).
